# EUROPÄISCHE PATENTSCHRIFT

(11) **EP 0 487 862 B1**
(45) Veröffentlichungstag und Bekanntmachung des Hinweises auf die Patenterteilung: **06.04.1994**
(21) Anmeldenummer: 91116919.1
(22) Anmeldetag: 04.10.1991
(51) Int. Cl.: B60T 8/32

(54) **Antiblockiersystem für allradgetriebene Fahrzeuge**
Anti-skid system for a four wheel drive vehicle
Système antiblocage pour véhicules à traction sur les quatres roues

(30) Priorität: 27.11.1990 DE 4037654
(43) Veröffentlichungstag der Anmeldung: 03.06.1992
(73) Patentinhaber: WABCO Vermögensverwaltungs-GmbH, D-30432 Hannover (DE)
(72) Erfinder: Eickhoff, Jürgen, W-3030 Walsrode (DE); Rode, Konrad, W-3016 Seelze 3 (DE); Riedemann, Henrich, W-3000 Hannover 91 (DE)
(74) Vertreter: Schrödter, Manfred, Dipl.-Ing.

(56) Entgegenhaltungen:
- WO-A-89/08038
- WO-A-91/04897
- GB-A- 2 158 533

## Beschreibung

Die Erfindung bezieht sich auf ein Antiblockiersystem für allradgetriebene Fahrzeuge gemäß dem Oberbegriff des Patentanspruchs 1.

Allradgetriebene Fahrzeuge werden in jüngerer Zeit vermehrt produziert. Um Verspannungen des Fahrwerks bei Kurvenfahrten auszugleichen, sind solche Fahrzeuge im allgemeinen nicht nur mit Achsdifferentialen, sondern auch mit einem Mittendifferential versehen. Die Antriebskraft des Motors wird dabei über das Mittendifferential und über die Achsdifferentiale auf die Räder verteilt.

Anstatt eines Mittendifferentials kann auch eine Viscosperre eingebaut sein, welche in etwa einem gesperrten Mittendifferential entspricht.

Ist nun ein derartiges Fahrzeug mit einem Antiblockiersystem ausgerüstet, dann treten im Fall einer geregelten Bremsung Rückwirkungen zwischen den beiden Achsen auf, da diese über das Mittendifferential miteinander verbunden sind. Dies führt insbesondere bei Fehlern im Antiblockiersystem dazu, daß die sonst gewohnte Bremsstabilität des Fahrzeugs nachläßt, und ein für den Fahrzeugführer überraschendes unvorhersehbares Bremsverhalten auftritt.

Aus der DE-PS 29 33 336 ist bekannt, bei einem Fehler in einem Kanal das Antiblockiersystems entweder nur den betreffenden Kanal abzuschalten, worauf das betroffene Rad blockiert, oder aber die gesamte betroffene Diagonale abzuschalten, worauf die Räder dieser Diagonalen blockieren.

Bekannt ist auch, das gesamte Antiblockiersystem im Fehlerfall abzuschalten, worauf alle Räder blockieren.

Diese bekannten, undifferenzierten Vorgehensweisen bewirken bei allradgetriebenen Fahrzeugen bei eingeschalteter Mittendifferentialsperre unterschiedliche Nachteile.

Bei Einzelabschaltung des betroffenen Kanals führt die eingelegte Zentralsperre oder eine zentrale Viscosperre bei zweiachsigen allradgetriebenen Fahrzeugen zu einem unkontrollierten Schlupf der intakten Achse und damit zu einer Instabilität des Fahrzeugs.

Bei Abschalten der gesamten Diagonalen ergibt sich bei nicht gesperrtem Mittendifferential eine unerwünschte Bremswegverlängerung und eine verminderte Seitenführung.

Bei Abschaltung des gesamten Antiblockiersystems ergibt sich ein vollständiger Verlust der Seitenführung, da dann alle Räder blockieren.

Der Erfindung liegt die Aufgabe zugrunde, bei allradgetriebenen Fahrzeugen mit Mittendifferential oder zentraler Viscosperre die von einem intakten Antiblockiersystem gewohnte gute Bremsstabilität auch im Fall eines teilweise gestörten Antiblockiersystems möglichst weitgehend zu erhalten.

Diese Aufgabe wird durch die im Patentanspruch 1 enthaltene Erfindung gelöst. Die Unteransprüche enthalten zweckmäßige Weiterbildungen der Erfindung.

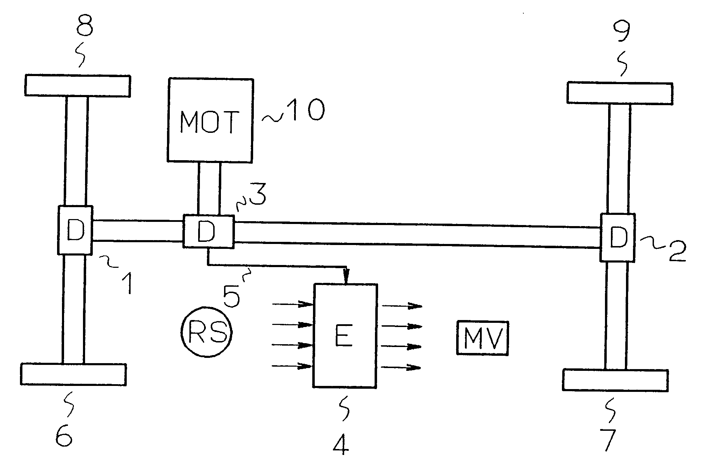

Die Erfindung wird im folgenden anhand eines in der Zeichnung dargestellten Ausführungsbeispieles näher erläutert.

Die Zeichnung zeigt in schematischer Darstellung ein allradgetriebenes Fahrzeug mit einem elektronischen Antiblockiersystem. Das Fahrzeug besitzt zwei Achsen mit Rädern (6) bis (9). Die Räder werden über Achsdifferentiale (1) und (2) angetrieben. Die genannten Achsdifferentiale sind verbunden über ein Mittendifferential (3), welches von einem Motor (10) angetrieben wird.

Das Antiblockiersystem besteht aus vier Radsensoren (RS), welche an den Rädern angeordnet sind und das Drehverhalten der Räder abtasten. Die Radsensoren sind an eine Blockierschutz-Elektronik (4) angeschlossen. Die Elektronik (4) steuert vier Magnetventile (MV), welche den Bremszylindern der einzelnen Räder vorgeschaltet sind. Hierdurch wird ein konstanter Bremsschlupf (etwa 20 %) eingeregelt.

Da das Antiblockiersystem für sich bekannt ist, ist es nicht im einzelnen genauer dargestellt.

Über eine Leitung (5) wird der Elektronik (4) mitgeteilt, ob das Mittendifferential (3) gesperrt ist oder nicht. Diese Information kann beispielsweise über einen am Mittendifferential (3) angebrachten Mikroschalter (nicht dargestellt) abgefragt werden. Es ist aber auch möglich, die Information an anderer Stelle, beispielsweise am Fahrer-Schalter zum Sperren des Mittendifferentials, abzugreifen.

Das so erzeugte Signal bewirkt in der Regellogik der Blockierschutzelektronik (4) ein spezielles Regelverhalten in dem Fall, daß einer der Regelkanäle gestört sein sollte. Falls dies der Fall ist, und gleichzeitig das Mittendifferential (3) nicht gesperrt ist, schaltet die Elektronik (4) nur den gestörten Regelkanal ab. Mit den intakten drei übrigen Kanälen wird weiter geregelt. In diesem Fall wird bei ungünstigen Randbedingungen der abgeschaltete Regelkanal zum Blockieren des betroffenen Rades führen. Durch die weiterregelnden drei intakten Kanäle ist jedoch eine ausreichende Seitenführung des Fahrzeugs gewährleistet.

Falls einer der Regelkanäle gestört ist, und das Mittendifferential (3) gesperrt ist, schaltet die Elektronik (4) zusätzlich auch den diagonal zum gestörten Regelkanal gegenüberliegenden intakten Kanal ab. In diesem Fall können zwei diagonal gegenüberliegende Räder blockieren. Die Seitenführung des Fahrzeugs wird jedoch durch die noch regelnde andere Diagonale weitgehend erhalten. Außerdem werden Rückwirkungen zwischen den beiden Achsen über das gesperrte Mittendifferential (3) vermieden, da für beide Achsen jetzt dieselben Verhältnisse, d.h., daß ein Rad regelt und ein Rad ungeregelt läuft, vorliegen.

Als weitere Maßnahme ist zweckmäßigerweise vorgesehen, daß die Elektronik (4) bei einem gestörten Regelkanal alle noch regelnden Kanäle auf eine reine Individual-Regelung umschaltet. Eine etwa an der Vorderachse angewendete spezielle Regellogik zur Verminderung von Giermomenten wird also abgeschaltet. Hierdurch wird bei den geregelten Rädern eine optimale Bremskraft gewährleistet, und eine Beeinflussung durch ein fehlerhaftes Rad auf die Regelung der noch intakten Räder ausgeschlossen.

Schließlich ist es noch zweckmäßig, bei einem Sensorfehler an einem Rad für eine Mitsteuerung des hierdurch gestörten Kanals das Radgeschwindigkeitssignal des anderen Rades derselben Achse zu verwenden. Hierdurch kann ein sofortiges Blockieren des betroffenen Rades vermieden werden. Die gesperrten Mittendifferential wird damit eine negative Beeinflussung der anderen Räder verhindert.

## Patentansprüche

1. Antiblockiersystem für allradgetriebene Fahrzeuge, mit zwei Achsdifferentialen (1, 2) und einem sperrbaren Mittendifferential (3), sowie einer Elektronik (4) mit vierkanaliger Individual-Regelung, die aus den Signalen von Radsensoren (RS) Ansteuersignale für Magnetventile (MV) berechnet, gekennzeichnet durch folgende Merkmale:
a) die Elektronik (4) erkennt, ob das Mittendifferential (3) gesperrt ist;
b) falls einer der Regelkanäle gestört ist und das Mittendifferential (3) nicht gesperrt ist, schaltet die Elektronik (4) nur den gestörten Regelkanal ab;
c) falls einer der Regelkanäle gestört ist und das Mittendifferential (3) gesperrt ist, schaltet die Elektronik (4) zusätzlich auch den diagonal gegenüberliegenden, intakten Regelkanal ab.

2. Antiblockiersystem nach Anspruch 1, dadurch gekennzeichnet daß, die Elektronik (4) bei einem gestörten Regelkanal alle noch regelnden Kanäle auf eine reine Individual-Regelung umschaltet.

3. Antiblockiersystem nach Anspruch 1 bis 2, dadurch gekennzeichnet, daß die Elektronik (4) bei einem Sensorfehler für die Regelung des hierdurch gestörten Kanals das Radgeschwindigkeitssignal des anderen Rades der gleichen Achse mitverwendet.

## Claims

1. An anti-lock system for four-wheel drive vehicles, having two axle differentials (1, 2) and a lockable intermediate differential (3), and also an electronics assembly (4) having four-channel individual control which calculates control signals for electromagnetic valves (MV) from the signals from wheel sensors (RS), characterized in that
(a) the electronics assembly (4) detects whether the intermediate differential (3) is locked;
(b) should one of the control channels be defective and the intermediate differential (3) not be locked the electronics assembly (4) disables only the defective control channel;
(c) should one of the control channels be defective and the intermediate differential (3) be locked, the electronics assembly (4) additionally disables also the diagonally opposite intact control channel.

2. An anti-lock system according to claim 1, characterized in that the electronics assembly (4) switches all channels still effecting control to a straight individual control when one control channel is defective.

3. An anti-lock system according to claims 1 and 2, characterized in that in the event of a sensor defect, the electronics assembly (4) uses the wheel speed of the other wheel of the same axle for control of the channel affected by the defect.

## Revendications

1. Système antiblocage pour véhicule à quatre roues motrices, comprenant deux différentiels d'arbre (1, 2) et un différentiel central blocable (3), ainsi qu'un système électronique (4) avec régulation individuelle à quatre canaux, qui calcule à partir des signaux de détecteurs de roue (RS) des signaux de pilotage pour des valves magnétiques (MV), caractérisé par les éléments suivants:
a) le système électronique (4) reconnaît si le différentiel central (3) est bloqué;
b) si l'un des canaux de régulation est perturbé et que le différentiel central (3) n'est pas bloqué, le système électronique (4) coupe uniquement le canal de régulation perturbé;
c) si l'un des canaux de régulation est perturbé et que le différentiel central (3) est bloqué, le système électronique (4) coupe additionnellement également le canal de régulation intact diagonalement opposé.

2. Système antiblocage selon la revendication 1, caractérisé en ce que le système électronique (4) bascule, dans le cas d'un canal de régulation perturbé, tous les canaux assurant encore une régulation sur une régulation purement individuelle.

3. Système antiblocage selon l'une ou l'autre des revendications 1 et 2, caractérisé en ce que le système électronique (4) utilise le signal de vitesse de l'autre roue du même axe, dans le cas d'une panne de détecteur, pour la régulation du canal perturbé par cette panne.
